# EUROPEAN PATENT SPECIFICATION

(11) **EP 1 894 309 B1**
(45) Date of publication and mention of the grant of the patent: **11.04.2012**
(21) Application number: 06768891.1
(22) Date of filing: 15.06.2006
(51) Int. Cl.: H04M 1/725

(54) **METHOD AND SYSTEM FOR PROVIDING INTERACTIVE ANNUNCIATOR FOR MOBILE COMMUNICATION TERMINAL**
VERFAHREN ZUR BEREITSTELLUNG EINER INTERAKTIVEN MELDUNGSFUNKTION FÜR MOBILE KOMMUNIKATIONSENDGERÄTE
PROCEDE ET SYSTEME PERMETTANT D'OBTENIR UN ANNONCIATEUR INTERACTIF POUR UN TERMINAL DE COMMUNICATION MOBILE

(30) Priority: 15.06.2005 KR 20050051582
(43) Date of publication of application: 05.03.2008
(73) Proprietor: SK Telecom. Co., Ltd., Seoul 100-999 (KR)
(72) Inventor: PARK, Youngmin, 121-701, JangmimaeulKolon Apt., Seongnam-si, Gyeonggi-do, 463-788 (KR); YI, Chaeyong, 301, Sky Ville, 135-33, Seoul, 110-280 (KR); KIM, Hoojong, 7-108, Gaepo 1cha Woosung Apt., 503, Seoul, 135-281 (KR)
(74) Representative: Hassa, Oliver Michael
(86) International application number: PCT/KR2006/002299
(87) International publication number: WO 2006/135206

(56) References cited:
- KR-A- 2002 066 700
- KR-A- 2002 080 775
- KR-A- 2002 096 247
- KR-A- 2005 021 613
- US-A1- 2002 123 368
- US-A1- 2004 261 031

## Description

### Technical Field

The present invention relates to a method and a system for providing an interactive annunciator for a mobile communication terminal. More particularly, the present invention relates to a method and a system for providing interactive annunciators for a mobile communication terminal so that a focus can be moved between the annunciators on the upper end of an LCD display module for displaying information regarding the condition of the mobile communication terminal and, when one of the annunciators is focused, information regarding its condition or menu items are displayed for interaction with the user.

### Background Art

As generally known in the art, mobile communication systems have evolved from 1^{st} generation analog AMPS (Advanced Mobile Phone System) and 2^{nd} generation cellular/PCS (Personal Communication Service) systems into 3^{rd} generation IMT-2000 (International Mobile Telecommunication 2000), which has been recently standardized by ITU-R and commercialized in line with development in information/communication technologies. The IMT-2000 includes CDMA 2000 1X, 3X, EV-DO, and WCDMA (Wideband CDMA) and uses an IS-95SC network, which has evolved from conventional IS-95A and IS-95B networks, so that it can provide a wireless Internet service at a maximum data transmission speed of 144 Kbps, which is substantially faster than that of the IS-95A or IS-95B network (14.4 Kbps or 56 Kbps). Particularly, the IMT-2000 not only improves the quality of conventional voice communication service and WBS (Wireless Broadcasting Service), but also provides various multimedia services (e.g. AOD, VOD) at a faster speed.

Such evolution of mobile communication systems are followed by evolution of mobile communication terminals into multipurpose devices, which can provide various types of applications in addition to basic voice communication. Users can download various pieces of multimedia data, such as images, moving pictures, music, and games, and run the data by using mobile communication terminals. Mobile communication terminals incorporate various types of convenient functions (e.g. electronic organizer, photo editor, camera). In addition, mobile communication terminals can realize colorful graphic environment on the idle screen, as a result of improved performance of LCD drivers.

As mobile communication terminals tend to have improved functions, much emphasis is placed on user interface, which enables users to conveniently use the terminals.

Reference U.S. Patent Publication No. 2004/261031 discloses a method of displaying a menu on a display of an electronic device. The method comprises the steps of displaying one or more selection elements, defining an auxiliary element for at least one selection element, activating one selection element and displaying an auxiliary element only in an active selection element.

Reference U.S. Patent Publication No. 2002/123368 discloses a pocket telephone in which the focus is positioned on one of the icons shown on a main menu screen and the focal icon is shown enlarged, while the remaining icons are visible. On the main menu screen, a plurality of icons corresponding to items or groups of items from which to choose are shown. The focus (selector) is positioned on one of the icons (the focal icon is surrounded by a frame-like cursor) and the focal icon is shown enlarged. By working the joy stick, the user can shift the focus to any icon. The remaining icons other than the focus icon shift to be more closely spaced, thus widening the area where the focal icon is shown. No matter what icon is chosen as the focal one, the icons shown remain the same.

However, despite various attempts to provide a more convenient and accessible user interface, the icons (i.e. annunciators) placed on the upper end of an LCD screen (i.e. annunciator region) for the purpose of displaying various conditions of a mobile communication terminal, e.g. the reception condition, the battery's charged level, and arrival of text messages, can do nothing but provide simple information as icons.

Particularly, although conventional annunciators can display the conditions of the mobile communication terminal so that the user can take measures accordingly, they can neither access nor check the conditions. This means that, in order to be informed of a specific condition accurately, he must search through stages of menu items.

In addition, when the user encounters an unfamiliar annunciator, he can neither understand its meaning nor determine which menu to select.

### Disclosure of the Invention

Therefore, the present invention has been made in view of the above-mentioned problems, and it is an object of the present invention to provide a method and a system for providing interactive annunciators for a mobile communication terminal so that a focus can be moved between the annunciators on the upper end of an LCD display module for displaying information regarding the condition of the mobile communication terminal and, when one of the annunciators is focused, information regarding its condition or menu items are displayed for interaction with the user. According to an aspect of the present invention, there is provided a method for providing an interactive annunciator for a mobile communication terminal having a key input module, a microprocessor, a program memory for storing an interactive annunciator program, a data storage module, and an LCD display module, the method including the steps of moving a focus to an annunciator in an annunciator region on an upper end of a standby screen of the LCD display module when a first key button for moving the focus to the annunciator region is operated wherein when the first key button is operated, the interactive annunciator program confirms whether or not information regarding a condition of the mobile communication terminal has been updated, and moves the focus to the annunciator containing updated information regarding the condition of the mobile communication terminal if the information has been updated; displays a menu item or information regarding the condition of the mobile communication terminal in conformity with the focused annunciator; moves the focus between annunciators when a second key button for moving the focus between the annunciators is operated and displays the menu item or the information regarding the condition of the mobile communication terminal in conformity with the focused annunciator; moves the focus between menu items when a third key button for moving the focus between the menu items is operated; and performs a function corresponding to a menu item when the menu item is focused and a corresponding key button is operated.

In accordance with another aspect of the present invention, there is provided a system for providing an interactive annunciator for a mobile communication terminal, the system including a program memory for storing an interactive annunciator program and data regarding a condition of the mobile communication terminal and a menu item, the interactive annunciator program being coded so as to move a focus to an annunciator in an annunciator region when a user operates a key, move the focus between annunciators or between menu items of an annunciator, and display information regarding the condition of the mobile communication terminal or the menu item in conformity with a focused annunciator; a key input module having keys for inputting characters and numerals and special keys for performing predetermined functions of the mobile communication terminal; a data storage module acting as a data buffer when the interactive annunciator program is run, the data storage module temporarily storing data inputted by the user or storing text or image data received by the mobile communication terminal from an outside; an LCD display module for displaying the annunciator in an activated or deactivated state, the LCD display module displaying information regarding the condition of the mobile communication terminal or the menu item in conformity with a focused annunciator; a key input module having keys for inputting characters and numerals and special keys for performing predetermined functions of the mobile communication terminal; a data storage module being adapted to act as a data buffer when the interactive annunciator program is run, the data storage module being adapted to temporarily store data inputted by the user or to store text or image data received by the mobile communication terminal from an outside; an LCD display module for displaying the annunciator in an activated or deactivated state, the LCD display module being adapted to display information regarding the condition of the mobile communication terminal or the menu item in conformity with the focused annunciator; and a microprocessor for running the interactive annunciator program when the user operates a key for running the interactive annunciator program so that the focus is moved to the annunciator in the annunciator region, the focus being moved between the annunciators or the menu items of the annunciator when the user operates the key for moving the focus, the information regarding the condition of the mobile communication terminal or the menu item being displayed on the LCD display module in conformity with the focused annunciator, wherein the interactive annunciator program is coded to confirm whether or not information regarding the condition of the mobile communication terminal has been updated when the key for running the interactive anunciator is inputted, and move the focus to the annunciator containing updated information regarding the condition of the mobile communication terminal.

### Brief Description of the Drawings

The foregoing and other objects, features and advantages of the present invention will become more apparent from the following detailed description when taken in conjunction with the accompanying drawings in which:
FIG. 1 shows the construction of a mobile communication terminal according to a preferred embodiment of the present invention;
FIG. 2 is a flowchart showing a method for providing an interactive annunciator for a mobile communication terminal according to a preferred embodiment of the present invention;
FIGs. 3a to 3h show information regarding the
   condition of a mobile communication terminal or a menu item, which is displayed when a focus is positioned on an annunciator, respectively; and
FIG. 4 shows a screen on which an annunciator is displayed in the annunciator region.

### Best Mode for Carrying Out the Invention

Reference will now be made in detail to the preferred embodiment of the present invention. It should be noted that the similar components are designated by similar reference numerals although they are illustrated in different drawings. Also, in the following description, a detailed description of known functions and configurations incorporated herein will be omitted when it may obscure the subject matter of the present invention.

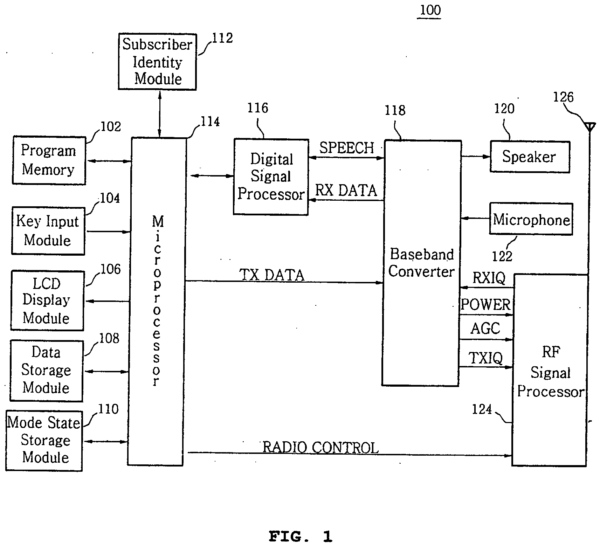

FIG. 1 shows the construction of a mobile communication terminal according to a preferred embodiment of the present invention.

A mobile communication terminal 100 according to a preferred embodiment of the present invention includes a program memory 102; a key input module 104; an LCD display module 106; a data storage module 108; a mode state storage module 110; a subscriber identity module 112; a microprocessor 114; a digital signal processor 116; a baseband converter 118; a speaker 120; a microphone 122; an RF (Radio Frequency) signal processing module 124; and an antenna 126.

The key input module 104 according to a preferred embodiment of the present invention has numeric keys for inputting numbers (e.g. telephone numbers), character keys for inputting characters, function keys for performing specific functions, and direction keys. When the user presses a key button, the key input module 104 generates key data, which corresponds to the pressed key button, and transmits the data to the microprocessor 114. Particularly, the key input module 104 may separately have a dedicated key button for running an interactive annunciator program (described later) so that a focus is moved to a desired annunciator in the annunciator region.

The program memory 102 according to a preferred embodiment of the present invention stores a protocol software for processing messages transmitted/received to/from a mobile communication network, an operating system, a control program for controlling the overall operation of the mobile communication terminal, and applications. Particularly, the program memory 102 stores an interactive annunciator program, which has been coded to operate in the following manner: when the user operates keys in order to move the focus to the annunciator region, the focus is moved to an annunciator in the annunciator region. When the user operates keys so as to move the focus, the focus is moved between annunciators or between menu items of an annunciator together with a display of information regarding the condition of the terminal or the menu items, based on the focused annunciator. In addition, the program memory 102 stores data necessary to run the interactive annunciator program, as well as data regarding the condition of the terminal and menu items, which correspond to respective annunciators.

The interactive annunciator program is preferably coded in such a manner that, upon receiving key input for moving the focus to the annunciator region, the program confirms whether or not information regarding the terminal's condition has been updated and, if the information has been updated, the program moves the focus to an annunciator, which includes updated information regarding the terminal's condition. For example, when a new text message has arrived and is followed by key input for moving the focus to the annunciator region, the program moves the focus to an annunciator which indicates the message's arrival.

The program memory 120 may be an EEPROM (Electrically Erasable and Programmable Read Only Memory), for example, which can not only read, but also electrically erase recorded data and rerecord data. Each program may be implemented by using a C programming language, objected- oriented C++, or JAVA, depending on the operating system supported by the mobile communication terminal 100.

The LCD display module 106 according to a preferred embodiment of the present invention displays the operation mode of the mobile communication terminal 100. Particularly, the LCD display module 106 displays annunciators for displaying information regarding the condition of the terminal 100 on the upper end, so that menu items or information regarding the condition of the terminal 100 is displayed in accordance with a focused annunciator.

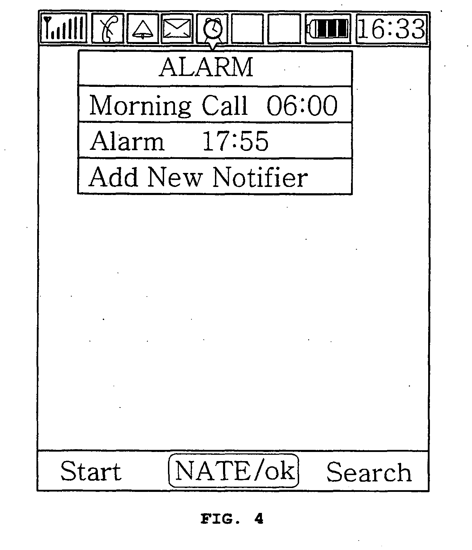

Conventional mobile communication terminals do not display every annunciator in the annunciator region of the LCD display module. For example, when no message has newly arrived, the corresponding annunciator (i.e. annunciator for indicating the arrival of messages) is not displayed. In contrast, the LCD display module according to a preferred embodiment of the present invention displays all annunciators either in an activated or deactivated state so that, even when an annunciator is deactivated, the focus can be moved to that annunciator for direct access to corresponding menu items, as will be described in more detail with reference to FIG. 4.

The data storage module 108 according to a preferred embodiment of the present invention acts as a data buffer when the mobile communication terminal 100 runs a program. The data storage module 108 temporarily stores data inputted by the key input module 102. In addition, the data storage module 108 stores other pieces of data, including characters and images received by the mobile communication terminal 100 from the outside. The data storage module 108 may be a RAM (Random Access Memory), for example.

The microprocessor 114 according to a preferred embodiment of the present invention controls the overall operation of the mobile communication terminal 100 in accordance with a state flag stored in the mode state storage module 110. Particularly, when the user operates keys in order to move the focus to the annunciator region, the microprocessor 114 reads the key operation and runs the interactive annunciator program. Under the control of the microprocessor 114, the interactive annunciator program moves the focus to a specific annunciator and reads data regarding the condition of the terminal 100 or menu items, which correspond to that annunciator, so that information regarding the condition of the terminal 100 or menu items are displayed on the LCD display module 106. In the case of key input for moving the focus between annunciators, the program reads the input and moves the focus between the annunciators accordingly. Then, the program retrieves data regarding the condition of the terminal 100 and menu items, which correspond to the focused annunciator, and displays the data on the LCD display module 106 under the control of the microprocessor 114. In addition, when a specific key button (e.g. confirmation key button) is operated while a menu item is focused, a function corresponding to that menu item is performed under the control of the microprocessor 114.

The mode state storage module 110 stores the current operation mode of the mobile communication terminal 100 as a state flag (0, 1, 2...) in accordance with the selection made via the key input module 102. The subscriber identity module 112 stores subscriber registration information (e.g. proper number, personal security key), which is allocated to each subscriber's terminal.

The digital signal processor (hereinafter, referred to as DSP) 116 acts as an equalizer for coding or decoding audio signals and removing multi-path noise, in addition to processing audio data. The DSP 116 transmits/receives audio data SPEECH to/from the baseband converter 118. In addition, the DSP 116 receives digital data RX DATA from the baseband converter 118.

The baseband converter 118 converts signals, which are transmitted/received among the RF signal processor 124, the DSP 116, the speaker 120, and the microphone 122, into baseband signals through DAC (digital to analog conversion) and ADC (analog to digital conversion). The baseband converter 118 sends transmission data TXIQ to the RF signal processor 124 and controls the power POWER of the RF signal processor 124 or automatically controls its gain AGC. In addition, the baseband signal processor 124 gets reception signal RXIQ from the RF signal processor 124.

The RF signal processor 124 demodulates and amplifies RF signals received from the antenna 126. In addition, the RF signal processor 124 modulates transmission signals from the baseband converter 118 and emits them into propagation space. The speaker 120 outputs audible sound based on the audio data from the baseband converter 118 and converts the user's voice input into electric signals.

The antenna 126 receives signals from the RF signal processor 124 and transmits them to the outside, and vice versa.

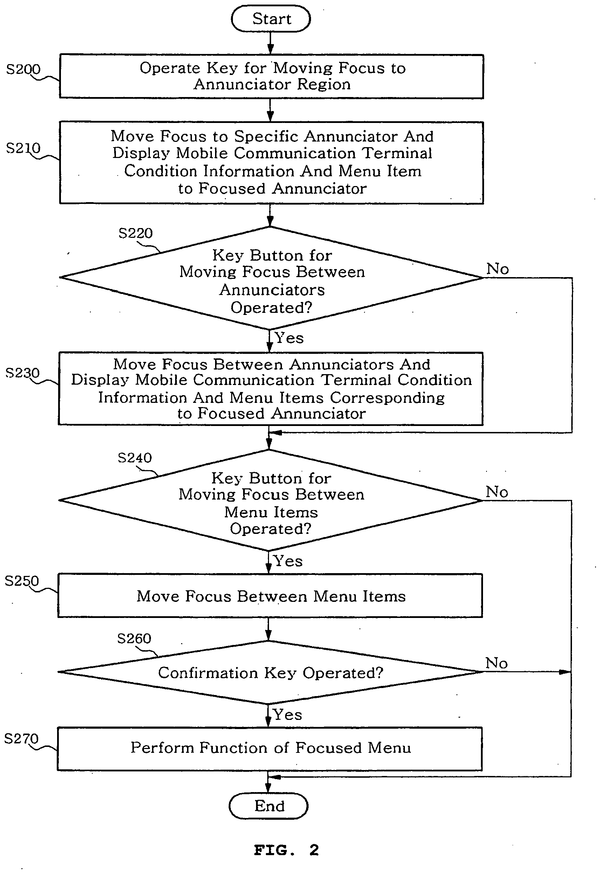

FIG. 2 is a flowchart showing a method for providing an interactive annunciator for a mobile communication terminal according to a preferred embodiment of the present invention.

When the user operates a key button for moving the focus to the annunciator region (S200), the focus is moved to an annunciator so that corresponding information regarding the condition of the terminal or menu items are displayed on the LCD display module 106 (S210). Preferably, when the key button for moving the focus to the annunciator region is operated, it is confirmed whether or not information regarding the condition of the terminal has been updated. When there is updated information, the focus is moved to an annunciator, which includes the updated information. The key button for moving the focus to the annunciator region may be a dedicated key button separately positioned on the terminal. Alternatively, one of existing key buttons may be operated in a "long key input" or "short key input" mode so that the focus is moved to the annunciator region.

When the user operates a key button for moving the focus between annunciators (S220), the focus is moved between annunciators so that information regarding the condition of the terminal or menu items, which correspond to the focused annunciator, are displayed (S230). In order to move the focus between annunciators, a leftward/rightward movement key button may be used. As mentioned above, the focus can be moved between deactivated annunciators, as well as between activated annunciators.

When a key button is operated so as to move the focus between menu items of a focused annunciator (S240), the focus is moved between the menu items (S250). When a confirmation key button OK is operated while the focus stays on a menu (S260), a function corresponding to that menu is performed (S270).

Annunciators displayed in the annunciator region include one for indicating the reception condition; one for indicating the communication condition; one for indicating the bell type; one for indicating the arrival of messages; one for indicating the alarm; one for indicating the condition of a mini SD (Secure Digital) memory; one for indicating the battery condition; and one for indicating the time. The annunciator for indicating the condition of a mini SD memory may be omitted if no mini SD memory is mounted on the mobile communication terminal 100.

Display of information regarding the condition of the terminal or menu items, which correspond to the enumerated annunciators, will now be described with reference to the corresponding drawings.

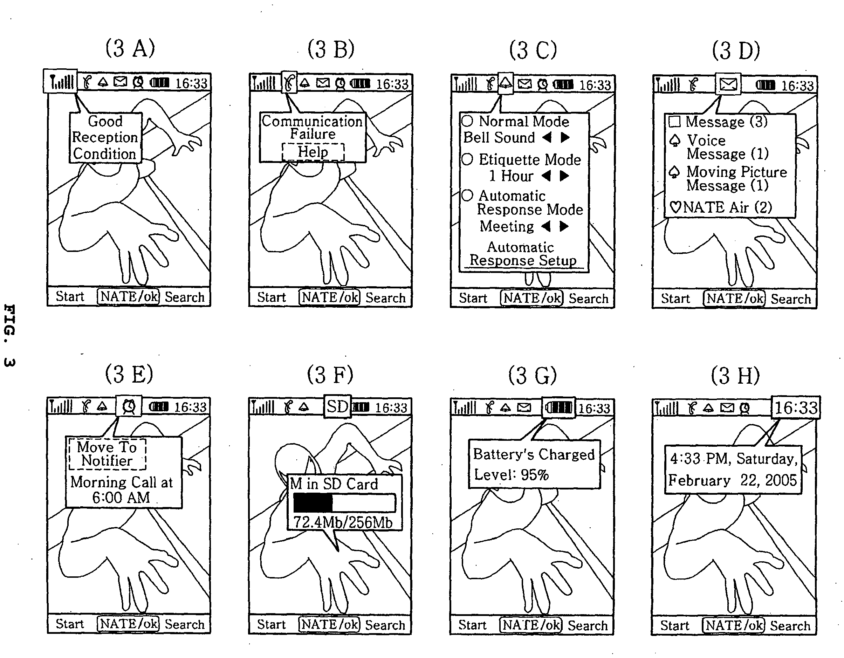

FIGs. 3a to 3h show information regarding the condition of a mobile communication terminal or a menu item, which is displayed when a focus is positioned on an annunciator, respectively.

FIG. 3a shows information regarding the reception condition of the terminal displayed on the screen when the focus is positioned on the annunciator for indicating the reception condition. As shown, either a message "GOOD RECEPTION CONDITION" or "POOR RECEPTION CONDITION" is displayed.

FIG. 3b shows condition information or menu items displayed on the screen when the focus is positioned on the annunciator for indicating the communication condition. One of messages "STANDBY", "COMMUNICATING", and "COMMUNICATION FAILURE" is displayed depending on the communication condition. When the message "COMMUNICATION FAILURE" is displayed, it is followed by an "HELP" item for telling the reason and instructing how to solve it.

FIG. 3c shows condition information or menu items displayed on the screen when the focus is on the annunciator for indicating the bell type. The menu items include "NORMAL MODE", "ETIQUETTE MODE", and "AUTOMATIC RESPONSE MODE", and information regarding the condition of each item is displayed under the corresponding item.

Particularly, FIG. 3c shows the bell type appearing under the item "NORMAL MODE", and the type can be selected from "BELL SOUND", "VIBRATION", AND "NO SOUND" by operating a corresponding key button.

The time setting for the etiquette mode appears under the item "ETIQUETTE MODE", and the setting can be adjusted by using a corresponding key button.

The type of automatic response appears under the item "AUTOMATIC RESPONSE MODE", and the mode can be selected from "MEETING", "SLEEPING", and "DRIVING" by operating a corresponding key button. If necessary, a new type of automatic response may be added to the settings.

FIG. 3d shows condition information or menu items displayed on the screen when the focus is positioned on the annunciator for indicating the arrival of messages. The menu items include "TEXT MESSAGE", "VOICE MESSAGE", "MOVING PICTURE MESSAGE", and "NATE AIR". In addition, the number of newly received messages is indicated under the corresponding items.

FIG. 3e shows condition information or menu items displayed on the screen when the focus is positioned on the annunciator for indicating the alarm. The time setting of the morning call or alarm is displayed together with an item "ALARM SETUP".

When the focus is positioned on the annunciator for indicating the condition of a mini SD memory, information regarding the total capacity of the memory vs. consumed capacity is displayed as shown in FIG. 3f. When the focus is positioned on the annunciator for indicating the battery condition, the percentage of charged level of the battery is displayed as shown in FIG. 3g.

FIG. 3h shows condition information or menu items displayed on the screen when the focus is on the annunciator for displaying the time. The condition information includes date, time, and day information, and the menu items include an item "TODAY'S SCHEDULE" for schedule management.

FIG. 4 shows a screen on which annunciators are displayed in the annunciator region.

For quick confirmation of information regarding the condition of the mobile communication terminal and easy access to corresponding menu items, not only annunciators currently displayed on the LCD display module (i.e. activated annunciators), but also those not currently displayed thereon (i.e. deactivated annunciators) must be accessible so that the focus can be moved to any of them, as mentioned above. Therefore, according to the present invention, both activated and deactivated annunciators are displayed on the screen, as shown in FIG. 4. The distinction between the activated and deactivated annunciators can be made by shading one of the two types of annunciators. Alternatively, the activated annunciators may be shown to protrude, while the deactivated annunciators are shown to be dented.

### Industrial Applicability

As can be seen from the foregoing, according to the present invention, a user can conveniently check information regarding the condition of a mobile communication terminal and easily access corresponding menu items, because the focus can be moved between annunciators so that information regarding the condition of the terminal or menu items, which correspond to the focused annunciator, are displayed. In addition, even when the user encounters an unfamiliar annunciator on the screen, he can directly obtain information regarding that annunciator by moving the focus to it without consulting the manual.

## Claims

1. A method for providing an interactive annunciator for a mobile communication terminal (100) having a key input module (104), a microprocessor (114), a program memory (102) for storing an interactive annunciator program, a data storage module (108), and an LCD display module (106), the method comprising the steps of:
moving by the interactive annunciator program a focus to an annunciator in an annunciator region on an upper end of a standby screen of the LCD display module (106) when a first key button for moving the focus to the annunciator region is operated,
wherein when the first key button is operated, the interactive annunciator program
confirms whether or not information regarding a condition of the mobile communication terminal (100) has been updated, and
moves the focus to the annunciator containing updated information regarding the condition of the mobile communication terminal (100) if the information has been updated;
displays a menu item or information regarding the condition of the mobile communication
terminal (100) in conformity with the focused annunciator;
es
moves the focus between annunciators when a second key button for moving the focus between the annunciators is operated and displays the menu item or the information regarding the condition of the mobile communication terminal (100) in conformity with the focused annunciator;
moves the focus between menu items when a third key button for moving the focus between the menu items is operated; and
performs a function corresponding to a menu item when the menu item is focused and a corresponding key button is operated.

2. The method as claimed in claim 1, wherein the focus is adapted to be moved to a deactivated annunciator, as well as to an activated annunciator.

3. The method as claimed in claim 1, wherein the annunciator region contains at least one annunciator selected from the group consisting of an annunciator for indicating a reception condition, an annunciator for indicating a communication condition, an annunciator for indicating a bell type, an annunciator for indicating a message, an annunciator for indicating alarm, an annunciator for indicating a condition of a mini SD memory, an annunciator for indicating a battery condition, and an annunciator for indicating time.

4. The method as claimed in claim 3, wherein the annunciator for indicating a communication condition has a menu item "HELP" for telling a reason of communication failure and instructing how to solve a problem; the annunciator for indicating a bell type has at least one of menu items "NORMAL MODE", "ETIQUETTE MODE", and "AUTOMATIC RESPONSE MODE"; the annunciator for indicating a message has at least one of menu items "TEXT MESSAGE", "VOICE MESSAGE", "MOVING PICTURE MESSAGE", and "NATE AIR", information regarding a number of newly received messages appearing on a rear end of respective menu items; the annunciator for indicating alarm contains information regarding setup of morning call and alarm and has a menu item "ALARM SETUP"; and the annunciator for displaying time has a menu item "TODAY'S SCHEDULE".

5. The method as claimed in claim 4, wherein, when the menu item "NORMAL MODE" is selected, information regarding current setup of the bell type is displayed such that the bell type can be modified by operating a corresponding key button; when the menu item "ETIQUETTE MODE" is selected, information regarding etiquette mode setup time is displayed such that the etiquette mode time setup time can be modified by operating a corresponding key button; and, when the menu item "AUTOMATIC RESPONSE MODE" is selected, information regarding current setup of automatic response type is displayed such that the automatic response type can be modified by operating a corresponding key button.

6. The method as claimed in claim 1, wherein the first key button is separately positioned on the mobile communication terminal (100) or is realized by operating an existing key button as a long key or a short key.

7. The method as claimed in claim 1, wherein the second key button is a leftward/rightward movement key button, and the third key button is an upward/downward movement key button.

8. A system for providing an interactive annunciator for a mobile communication terminal (100), the system comprising:
a program memory (102) for storing an interactive annunciator program and data regarding a condition of the mobile communication terminal (100) and a menu item, the interactive annunciator program being coded to move a focus to an annunciator in an annunciator region when a user operates a key, move the focus between annunciators or between menu items of an annunciator, and display information regarding the condition of the mobile communication terminal (100) or the menu item in conformity with a focused annunciator;
a key input module (104) having keys for inputting characters and numerals and special keys for performing predetermined functions of the mobile communication terminal (100);
a data storage module (108) being adapted to act as a data buffer when the interactive annunciator program is run, the data storage module being adapted to temporarily store data inputted by the user or to store text or
image data received by the mobile communication terminal (100) from an outside;
an LCD display module (106) for displaying the annunciator in an activated or deactivated state, the LCD display module (106) being adapted to display information regarding the condition of the mobile communication terminal (100) or the menu item in conformity with the focused annunciator; and
a microprocessor (114) for running the interactive annunciator program when the user operates a key for running the interactive annunciator program such that the focus is moved to the annunciator in the annunciator region, the focus being moved between the annunciators or the menu items of the annunciator when the user operates the key for moving the focus, the information regarding the condition of the mobile communication terminal (100) or the menu item being displayed on the LCD display module (106) in conformity with the focused annunciator,
wherein the interactive annunciator program is coded to confirm whether or not information regarding the condition of the mobile communication terminal (100) has been updated when the key for running the interactive anunciator is inputted, and move the focus to the annunciator containing updated information regarding the condition of the mobile communication terminal (100).

9. The system as claimed in claim 8, wherein the key input module (104) separately has a dedicated key button for running the interactive annunciator program.

## Patentansprüche

1. Verfahren zur Bereitstellung einer interaktiven Meldungsfunktion für ein Mobilkommunikations-Endgerät (100) mit einem Tasteneingabemodul (104), einem Mikroprozessor (114), einem Programmspeicher (102) zum Speichern eines interaktiven Meldungsfunktionsprogramms, einem Datenspeichermodul (108) und einem LCD-Anzeigemodul (106), wobei das Verfahren folgende Schritte umfasst:
- Bewegen, durch das interaktive Meldungsfunktionsprogramm, eines Fokus zu einer Meldungsfunktion in einer Meldungsfunktionsregion an einem oberen Ende eines Bereitschaftsbildschirmes des LCD-Anzeigemoduls (106), wenn eine erste Taste zum Bewegen des Fokus zu der Meldungsfunktionsregion betätigt wird,
wobei, wenn die erste Taste betätigt wird, das interaktive Meldungsfunktionsprogramm:
- bestätigt, ob Informationen über einen Zustand des Mobilkommunikations-Endgerätes (100) aktualisiert wurden oder nicht, und
- den Fokus zu der Meldungsfunktion, die aktualisierte Informationen über den Zustand des Mobilkommunikations-Endgerätes (100) enthält, bewegt, wenn die Informationen aktualisiert wurden;
- einen Menüpunkt oder Informationen über den Zustand des Mobilkommunikations-Endgerätes (100) entsprechend der fokussierten Meldungsfunktion anzeigt;
- den Fokus zwischen Meldungsfunktionen bewegt, wenn eine zweite Taste zum Bewegen des Fokus zwischen den Meldungsfunktionen betätigt wird, und den Menüpunkt oder die Informationen über den Zustand des Mobilkommunikations-Endgerätes (100) entsprechend der fokussierten Meldungsfunktion anzeigt;
- den Fokus zwischen Menüpunkten bewegt, wenn eine dritte Taste zum Bewegen des Fokus zwischen dem Menüpunkts betätigt wird; und
- eine Funktion entsprechend einem Menüpunkt ausführt, wenn der Menüpunkt fokussiert ist und eine entsprechende Taste betätigt wird.

2. Verfahren nach Anspruch 1, wobei der Fokus dafür ausgelegt ist, zu einer deaktivierten Meldungsfunktion sowie zu einer aktivierten Meldungsfunktion bewegt zu werden.

3. Verfahren nach Anspruch 1, wobei die Meldungsfunktionsregion mindestens eine Meldungsfunktion enthält, die aus folgender Gruppe ausgewählt ist: eine Meldungsfunktion zum Angeben eines Empfangszustandes, eine Meldungsfunktion zum Angeben eines Kommunikationszustandes, eine Meldungsfunktion zum Angeben eines Klingeltyps, eine Meldungsfunktion zum Angeben einer Mitteilung, eine Meldungsfunktion zum Angeben eines Alarms, eine Meldungsfunktion zum Angeben eines Zustandes eines Mini-SD-Speichers, eine Meldungsfunktion zum Angeben eines Batteriezustandes, und eine Meldungsfunktion zum Angeben der Zeit.

4. Verfahren nach Anspruch 3, wobei: die Meldungsfunktion zum Angeben eines Kommunikationszustandes einen Menüpunkt "HILFE" aufweist, um einen Grund für eine Kommunikationsstörung anzugeben und Anweisungen zur Lösung eines Problems zu geben; die Meldungsfunktion zum Angeben eines Klingeltyps einen oder mehrere der Menüpunkte "NORMALMODUS", "ETIKETTMODUS" und "AUTOMATISCHER-ANTWORT-MODUS" aufweist; die Meldungsfunktion zum Angeben einer Mitteilung einen oder mehrere der Menüpunkte "TEXTMITTEILUNG", "SPRACHMITTEILUNG", "VIDEOMITTEILUNG" und "NATE AIR" aufweist, wobei Informationen über eine Anzahl neu empfangener Mitteilungen an einem hinteren Ende jeweiliger Menüpunkte erscheinen; die Meldungsfunktion zum Angeben eines Alarms Informationen über die Einstellung eines Morgenrufs und -alarms enthält und einen Menüpunkt "ALARMEINSTELLUNG" aufweist; und die Meldungsfunktion zum Anzeigen der zeit einen Menüpunkt "HEUTIGER TERMINPLAN" aufweist.

5. Verfahren nach Anspruch 4, wobei, wenn der Menüpunkt "NORMALMODUS" gewählt wird, Informationen über die aktuelle Einstellung des Klingeltyps dergestalt angezeigt werden, dass der Klingeltyp durch Betätigen einer entsprechenden Taste modifiziert werden kann; wenn der Menüpunkt "ETIKETTMODUS" gewählt wird, Informationen über die Etikettmodus-Einstellzeit dergestalt angezeigt werden, dass die Etikettmoduszeit-Einstellzeit durch Betätigen einer entsprechenden Taste modifiziert werden kann; und wenn der Menüpunkt "AUTOMATISCHER-ANTWORT-MODUS" gewählt wird, Informationen über die aktuelle Einstellung des Typs der automatischen Antwort dergestalt angezeigt werden, dass der Typ der automatischen Antwort durch Betätigen einer entsprechenden Taste modifiziert werden kann.

6. Verfahren nach Anspruch 1, wobei die erste Taste separat an dem Mobilkommunikations-Endgerät (100) angeordnet ist oder durch Betätigen einer vorhandenen Taste als eine "Long Key" oder eine "Short Key" realisiert wird.

7. Verfahren nach Anspruch 1, wobei die zweite Taste eine Taste für eine Links-Rechts-Bewegung ist und die dritte Taste eine Taste für eine Aufwärts-Abwärts-Bewegung ist.

8. System zur Bereitstellung einer interaktiven Meldungsfunktion für ein Mobilkommunikations-Endgerät (100), wobei das System Folgendes umfasst:
- einen Programmspeicher (102) zum Speichern eines interaktiven Meldungsfunktionsprogramms und von Daten über einen Zustand des Mobilkommunikations-Endgerätes (100) und einen Menüpunkt, wobei das interaktive Meldungsfunktionsprogramm so codiert ist, dass es:
einen Fokus zu einer Meldungsfunktion in einer Meldungsfunktionsregion bewegt, wenn ein Benutzer eine Taste betätigt; den Fokus zwischen Meldungsfunktionen oder zwischen Menüpunkten einer Meldungsfunktion bewegt; und Informationen über den Zustand des Mobilkommunikations-Endgerätes (100) oder
den Menüpunkt entsprechend einer fokussierten Meldungsfunktion anzeigt;
- ein Tasteneingabemodul (104) mit Tasten zum Eingeben von Buchstaben und Zahlen und Sondertasten zum Ausführen vorgegebener Funktionen des Mobilkommunikations-Endgerätes (100);
- ein Datenspeichermodul (108), das dafür ausgelegt ist, als ein Datenpuffer zu fungieren, wenn das interaktive Meldungsfunktionsprogramm ausgeführt wird, wobei das Datenspeichermodul dafür ausgelegt ist, vorübergehend Daten zu speichern, die durch den
Benutzer eingegeben wurden, oder Text- oder Bilddaten zu speichern, die durch das Mobilkommunikations-Endgerät (100) von einer externen Quelle empfangen wurden;
- eine LCD-Anzeigemodul (106) zum Anzeigen der Meldungsfunktion in einem aktivierten oder deaktivierten Zustand, wobei das LCD-Anzeigemodul (106) dafür ausgelegt ist, Informationen über den Zustand des Mobilkommunikations-Endgerätes (100) oder den Menüpunkt entsprechend der fokussierten Meldungsfunktion anzuzeigen; und
- einen Mikroprozessor (114) zum Ausführen des interaktiven Meldungsfunktionsprogramms, wenn der Benutzer eine Taste zum Ausführen des interaktiven Meldungsfunktionsprogramms dergestalt betätigt, dass der Fokus zu der Meldungsfunktion in der Meldungsfunktionsregion bewegt wird, wobei der Fokus zwischen den Meldungsfunktionen oder den Menüpunkten der Meldungsfunktion bewegt wird, wenn der Benutzer die Taste zum Bewegen des Fokus betätigt, wobei die Informationen über den Zustand des Mobilkommunikations-Endgerätes (100) oder den Menüpunkt auf dem LCD-Anzeigemodul (106) entsprechend der fokussierten Meldungsfunktion angezeigt werden, wobei das interaktive Meldungsfunktionsprogramm dafür codiert ist zu bestätigen, ob Informationen über den zustand des Mobilkommunikations-Endgerätes (100) aktualisiert wurden oder nicht, wenn die Taste zum Ausführen der interaktiven Meldungsfunktion betätigt wird, und den Fokus zu der Meldungsfunktion zu bewegen, welche die aktualisierten Informationen über den Zustand des Mobilkommunikations-Endgerätes (100) enthält.

9. System nach Anspruch 8, wobei das Tasteneingabemodul (104) eine separate Sondertaste zum Ausführen des interaktiven Meldungsfunktionsprogramms aufweist.

## Revendications

1. Procédé permettant d'obtenir un annonciateur interactif pour un terminal de communication mobile (100) ayant un module d'entrée à touches (104), un microprocesseur (114), une mémoire de programme (102) pour stocker un programme d'annonciateur interactif, un module de stockage de données (108), et un module d'affichage LCD (106), le procédé comprenant les étapes consistant à :
- déplacer, par le programme d'annonciateur interactif, un curseur sur un annonciateur dans une région d'annonciateur sur une extrémité supérieure d'un écran de veille du module d'affichage LCD (106) quand une première touche pour déplacer le curseur sur la région d'annonciateur est actionnée,
dans lequel, lorsque la première touche est actionnée,
- le programme d'annonciateur interactif confirme si oui ou non des informations concernant un état du terminal de communication mobile (100) ont été mises à jour, et
- déplace le curseur sur l'annonciateur contenant des informations mises à jour concernant l'état du terminal de communication mobile (100) si les informations ont été mises à jour ;
- affiche un élément de menu ou des informations concernant l'état du terminal de communication mobile (100) selon l'annonciateur sélectionné ;
- déplace le curseur entre des annonciateurs quand une deuxième touche pour déplacer le curseur entre les annonciateurs est actionnée, et affiche l'élément de menu ou les informations concernant l'état du terminal de communication mobile (100) selon l'annonciateur sélectionné ;
- déplace le curseur entre des éléments de menu quand une troisième touche pour déplacer le curseur entre les éléments du menu est actionnée ; et
- exécute une fonction correspondant à un élément de menu lorsque l'élément de menu est sélectionné et qu'une touche correspondante est actionnée.

2. Procédé selon la revendication 1, dans lequel le curseur est conçu pour être déplacé sur un annonciateur désactivé, ainsi que sur un annonciateur activé.

3. Procédé selon la revendication 1, dans lequel la région d'annonciateur contient au moins un annonciateur sélectionné dans le groupe constitué d'un annonciateur pour indiquer un état de réception, d'un annonciateur pour indiquer un état de communication, d'un annonciateur pour indiquer un type de sonnerie, d'un annonciateur pour indiquer un message, d'un annonciateur pour indiquer une alarme, d'un annonciateur pour indiquer un état d'une mémoire mini SD, d'un annonciateur pour indiquer un état de la batterie, et d'un annonciateur pour indiquer l'heure.

4. Procédé selon la revendication 3, dans lequel l'annonciateur pour indiquer un état de communication possède un élément de menu « Aide » pour expliquer une raison d'échec de communication et indiquer comment résoudre un problème ; l'annonciateur pour indiquer un type sonnerie possède au moins un des éléments de menu « MODE NORMAL », « MODE ETIQUETTE » et « MODE REPONSE AUTOMATIQUE » ; l'annonciateur pour indiquer un message possède au moins un des éléments de menu « MESSAGE TEXTE », « MESSAGE VOCAL », « MESSAGE FILM », et « NATE AIR », des informations concernant le nombre de nouveaux messages reçus apparaissant sur une extrémité arrière des éléments de menu respectifs ; l'annonciateur pour indiquer l'alarme contient des informations concernant le réglage du réveil et de l'alarme et possède un élément de menu « REGLAGE DE L'ALARME » ; et l'annonciateur pour afficher l'heure possède un élément de menu « PROGRAMME D'AUJOURD'HUI ».

5. Procédé selon la revendication 4, dans lequel, lorsque l'élément de menu « MODE NORMAL » est sélectionné, des informations concernant le réglage actuel du type de sonnerie sont affichées de façon à ce que le type de sonnerie puisse être modifié en actionnant une touche correspondante ; lorsque l'élément de menu « MODE ETIQUETTE » est sélectionné, des informations concernant le réglage de durée du mode étiquette sont affichées de façon à ce que le réglage de durée du mode étiquette puisse être modifié en actionnant une touche correspondante ; et, quand l'élément de menu « MODE REPONSE AUTOMATIQUE » est sélectionné, des informations concernant le réglage actuel du type de réponse automatique sont affichées de façon à ce que le type de réponse automatique puisse être modifié en actionnant une touche correspondante.

6. Procédé selon la revendication 1, dans lequel la première touche est positionnée séparément sur le terminal de communication mobile (100) ou est réalisée en actionnant une touche existante par une pression longue ou une pression courte.

7. Procédé selon la revendication 1, dans lequel la deuxième touche est une touche de mouvement gauche/droite, et la troisième touche est une touche de mouvement haut/bas.

8. Système permettant d'obtenir un annonciateur interactif pour un terminal de communication mobile (100), le système comprenant :
- une mémoire de programme (102) pour stocker un programme d'annonciateur interactif et des données concernant un état du terminal de communication mobile (100) et un élément de menu, le programme d'annonciateur interactif étant codé pour déplacer un curseur sur un annonciateur dans une région d'annonciateur quand un utilisateur actionne une touche, déplacer le curseur entre des annonciateurs ou entre des éléments de menu d'un annonciateur, et afficher des informations concernant l'état du terminal de communication mobile (100) ou l'élément de menu selon l'annonciateur sélectionné ;
- un module d'entrée à touches (104) ayant des touches permettant de saisir des caractères et des chiffres et des touches spéciales pour exécuter des fonctions prédéterminées du terminal de communication mobile (100) ;
- un module de stockage de données (108) conçu pour servir de tampon de données lorsque le programme d'annonciateur interactif est exécuté, le module de stockage de données étant conçu pour stocker temporairement des données saisies par l'utilisateur ou pour stocker des données de texte ou d'image reçues par le terminal de communication mobile (100) depuis l'extérieur ;
- un module d'affichage LCD (106) pour afficher l'annonciateur dans un état activé ou désactivé, le module d'affichage LCD (106) étant conçu pour afficher des informations concernant l'état du terminal de communication mobile (100) ou l'élément de menu selon l'annonciateur sélectionné ; et
- un microprocesseur (114) pour exécuter le programme d'annonciateur interactif lorsque l'utilisateur actionne une touche pour exécuter le programme d'annonciateur interactif de façon à ce que le curseur soit déplacé sur l'annonciateur dans la région d'annonciateur, le curseur étant déplacé entre les annonciateurs ou les éléments de menu de l'annonciateur lorsque l'utilisateur actionne la touche pour déplacer le curseur, les informations concernant l'état du terminal de communication mobile (100) ou l'élément de menu étant affichés sur le module d'affichage LCD (106) selon l'annonciateur sélectionné,
dans lequel le programme d'annonciateur interactif est codé pour confirmer si oui ou non des informations concernant l'état du terminal de communication mobile (100) ont été mises à jour lorsque la touche pour exécuter l'annonciateur interactif est actionnée, et déplacer le curseur sur l'annonciateur contenant des informations actualisées concernant l'état du terminal de communication mobile (100).

9. Système selon la revendication 8, dans lequel le module d'entrée à touches (104) possède séparément une touche dédiée pour exécuter le programme d'annonciateur interactif.
